# EUROPEAN PATENT APPLICATION

(11) **EP 3 257 932 A1**
(43) Date of publication of application: **20.12.2017**
(21) Application number: 15881989.6
(22) Date of filing: 13.02.2015
(51) Int. Cl.: C12C 3/00, A23L 2/00, C12C 7/00

(54) **METHOD FOR MANUFACTURING SUGAR-CONTAINING LIQUID**

(71) Applicant: Suntory Holdings Limited, Osaka-shi, Osaka 530-8203 (JP)
(72) Inventor: ARITA, Tetsuya, Osaka 618-8503 (JP); YAMADA, Daisuke, Osaka 618-0001 (JP); YAMADERA, Junya, Tokyo 135-8631 (JP)
(74) Representative: Vossius & Partner Patentanwälte Rechtsanwälte mbB
(86) International application number: PCT/JP2015/054014
(87) International publication number: WO 2016/129115

(57) **Abstract**

A method for producing a sugar-containing liquid, including mixing a raw material liquid and a hop extract water; a sugar-containing liquid produced by the method; and a beer-taste beverage wherein a sugar-containing liquid obtained by the method is used. The method of the present invention can prepare a sugar-containing liquid having a high polyphenol concentration with an excellent productivity, so that a beer-taste beverage given with body can be provided. In addition, since the method of the present invention controls the amount of production of hop draff, some excellent effects are exhibited that the loss in stock of the sugar-containing liquid obtained is controlled, which contributes to excellent productivity.

## Description

### TECHNICAL FIELD

The present invention relates to a method for producing a sugar-containing liquid. More specifically, the present invention relates to a method for producing a sugar-containing liquid suitably usable as raw materials for beer-taste beverages, a sugar-containing liquid obtainable by the production method, and a beer-taste beverage using the sugar-containing liquid.

### BACKGROUND ART

In beer-taste beverages, raw materials such as malts or hops greatly influence their qualities. Hops, for example, not only give bitterness to beer-taste beverages but also give refreshing hoppy aroma and a body. Bitterness is attributable to an α-acid or the like in the hops, hoppy aroma attributable to terpenes or the like, and a body attributable to polyphenols or the like, so that each of them is attributable to various ingredients. Accordingly, the qualities of beer-taste beverages have been conventionally controlled by selecting hops used.

For example, Patent Publication 1 discloses that the *shimari* in taste can be given to nonalcoholic beer-taste beverages without making its flavor lacking in balances with astringency by increasing a weight ratio of hops to malts above the assumed level at which a flavor lacks in balances, specifically by controlling a weight ratio of a polyphenol to a total amount of extract component within a specified range.

In addition, Patent Publication 2 discloses that having remarked on influences by the addition of hops on foaming of beer, a beer or a beer-like beverage having excellent foaming can be obtained by adding a hop solution (see, paragraph 0037) after removal of hop draff by liquid-solid separation, the hop solution obtained by using at least one of hop pellets and hop extracts to a raw material mash liquid mixture at a stage after gyratory separation (see, paragraph 0048), and in one or more stages after cooling and before filtration. Here, since a hop solution obtained in a relatively low concentration prepared from 25 to 100 liters of an aqueous solvent based on 1 kg of hop pellets is added after cooling a wort, it is considered that an increase of turbidity caused by solids due to a polyphenol derived from the hops and coagulation of a protein is small. However, in a case where an aqueous solvent having a high hop content per solvent is used, there are no processes of forming the above draff in the steps subsequent to the addition, so that there is a risk of impairing the turbidity stability of a manufactured article.

In addition, in Patent Publication 3, a hop treatment liquid mixture is added to a raw material liquid mixture to reduce consumptions of thermal energy; however, hops are not separated from a hop solution after extraction of ingredients (see, paragraph 0045), so that it does not contribute to the reduction in losses in stock in the extract component of the raw material liquid mixture.

### RELATED ART REFERENCES

### PATENT PUBLICATIONS

Patent Publication 1: WO 2014/103011
Patent Publication 2: Japanese Unexamined Patent Publication No. 2010-178628
Patent Publication 3: Japanese Unexamined Patent Publication No. 2009-077730

### SUMMARY OF THE INVENTION

### PROBLEMS TO BE SOLVED BY THE INVENTION

Generally, in beer-taste beverages, it has been known that hop processed products obtained by variously processing the hops are used. The hop processed products include "Dry Hop Flowers" in which hops are simply dried; "Hop Pellets Type 90" in which Dry Hop Flowers are pulverized and pelletized; "Hop Pellets Type 45" in which Dry Hop Flowers are frozen and pulverized, and a fractionated lupulin fraction is concentrated and pelletized; and "Hop Extract" in which Hop Pellets Type 90 are subjected to a CO₂ extraction to extract bitterness ingredients. Further, as processed products having high degree of purification, as the aroma giving, "Oil-Rich Extract" in which hop pellets are subjected to an ethanol extraction to extract aroma ingredients can be used; as the body giving, "Polyphenol-Rich Pellets" which are by-products discharged during the production of hop extracts, and "Polyphenol-Rich Extract" obtained by concentrating only the polyphenol fraction from Polyphenol-Rich Pellets, a product in which hop bracts which are flower petal-like tissue parts in the outside of the hop flowers are dried, a product in which hop bracts are pulverized and pelletized, and the like can be used.

Among them, in order to give bitterness or flavor derived from hops to beer-taste beverages, hop pellets of Type 90, Type 45 or the like are generally used; however, when those hop pellets are used, the treatment of hop draff would be needed after a boiling step, so that there were some disadvantages that the treatment burdens become large when, for example, used in large amounts as in Patent Publication 1.

On the other hand, when the processed products of extract types such as "Oil-Rich Extract" and "Polyphenol-Rich Extract" are used, although the treatment of hop draff is not needed, since the processed products have a high degree of purification, the costs are enormous, making it disadvantageous in applications to beer-taste beverages.

An object of the present invention is to provide a method in which a sugar-containing liquid having a high polyphenol content is obtained, a sugar-containing liquid obtainable by the method, and a beer-taste beverage using the sugar-containing liquid.

### MEANS TO SOLVE THE PROBLEMS

In view of the above, as a result of intensive studies in order to solve the above problems, the present inventors have found that by separately adding extracts previously extracted from hops to a conventional raw material liquid, it is made possible to increase the content of the ingredient derived from hops in a sugar-containing liquid without increasing treatment burdens of hop draff, whereby one having a desired beer quality can be precisely produced, and the present invention has been perfected thereby.

The present invention relates to the following [1] to [3]:
[1] A method for producing a sugar-containing liquid, including mixing a raw material liquid and a hop extract water.
[2] A sugar-containing liquid produced by a method as defined in the above [1].
[3] A beer-taste beverage in which a sugar-containing liquid obtained by a method as defined in the above [1] is used as a raw material.

### EFFECTS OF THE INVENTION

The sugar-containing liquid obtainable by the method of the present invention exhibits an excellent effect of having a high polyphenol content. In addition, since the method of the present invention controls the amount of production of hop draff, some excellent effects are exhibited that the loss in stock of the sugar-containing liquid obtained is controlled, which contributes to excellent productivity.

### MODES FOR CARRYING OUT THE INVENTION

The method for producing a sugar-containing liquid of the present invention has a feature of including the step of mixing a raw material liquid and a hop extract water. Specifically, in the present invention, the present inventors have found for the first time that by mixing a raw material liquid with a separately prepared hop extract water, not by adding hops in an amount needed to give flavor of a sugar-containing liquid and boiling, a sugar-containing liquid having a high polyphenol content is produced, while reducing a loss in stock of the sugar-containing liquid. The present invention has a great feature of adding a hop extract water, when hops of a given amount are used so that a polyphenol content increases.

The beer-taste beverage in the present invention refers to a carbonated beverage having a beer-like flavor. In other words, unless specified otherwise, the beer-taste beverage in the present invention embraces all the carbonated beverages having beer flavor, regardless of the presence or absence of a fermentation step with an yeast. Specific examples include beers, *Happoushu* (low-malt beers), other miscellaneous liquors, liqueurs, nonalcoholic beverages and the like.

The raw material liquid in the present invention is not particularly limited, so long as the raw materials usable in known methods for producing beer-taste beverages are used, and the raw material liquid can be prepared by, for example, a process through a saccharification step and a boiling step.

The raw material includes, for example, amylaceous raw materials, hops, and water.

The amylaceous raw materials include raw materials such as *mugi,* rice, soybeans, peas, maize (corns), *Sorghum bicolor (Kaoliang),* potatoes, starches, and sugars. In addition, *mugi* that can be used as ordinary raw materials of beers or *Happoushu* can be used, including, for example, malt, barley, pearl barley, barley extract, barley flake, oats, hatomugi (Job's heart), rye wheat, enbaku (oats), and the like. Among them, malt is preferably used. The ratio of the malts in the sugar-containing liquid can be adjusted to, for example, less than 50%, or less than 25%. Here, the ratio of malts as used herein is a weight ratio of malts occupying the amylaceous raw materials, and "%" expressing the ratio means "% by weight." In the present invention, as the amylaceous raw materials, a saccharified starch which is already saccharified can be also used, in which case the above saccharification step can be omitted.

The hop refers to a perennial bine belonging to Cannabaceae, with the nomenclature of *Humulus lupulus.* As the hop usable in the raw material liquid, hop processed products such as ordinary pelletized hops, powder hops, and hop extracts which are usable in the production of beers and the like can be appropriately selected and used according to a desired flavor. In addition, hop processed products such as isomerized hops and reduced hops may be also used. The amount of hop used herein is not particularly limited, and, for example, when a pelletized hop or a powder hop is used, the amount of hop may be 0.01% by weight or more or so, of the entire amount of hops that are usable in the production of ordinary beers or *Happoshu,* from the viewpoint of giving appropriate bitterness to beers and *Happoshu.*

In the present invention, other raw materials besides the above ingredients can be used. Other raw materials include flavoring agents, acidulants, sweeteners, dietary fibers, bittering agents, color pigments, and the like. Optionally, an enzyme such as amylase may be added. The amounts of these materials used can be appropriately set according to known techniques.

The raw material liquid is obtained by supplying the above raw materials into a mash kettle or mash tun to carry out gelatinization and saccharification, then removing husks or the like by filtration, adding hops thereto, and boiling therewith. As the conditions in the saccharification step or the boiling step, conditions that are generally known may be used. Here, the raw material liquid as used herein refers not only to those for which boiling is perfected (raw material boiled liquid after boiling) but also a liquid in the course of boiling.

It is preferable that the raw material liquid in the present invention is, for example, a first wort and the like, from the viewpoint of not excessively increasing tannin which causes astringency while increasing the polyphenol content.

The polyphenol concentration of the raw material liquid is not unconditionally determined depending upon the amount of hops to be supplied to the raw material liquid, and there is no problem if the polyphenol concentration is 0 ppm, and the polyphenol concentration is preferably 350 ppm or more, more preferably 400 ppm or more, and even more preferably 450 ppm or more. In addition, the polyphenol concentration is preferably 650 ppm or less, more preferably 600 ppm or less, and even more preferably 550 ppm or less. Here, the polyphenol concentration as used herein means a total polyphenol (T-PP) concentration, and can be measured in accordance with a method described in "The Methods of Analysis of Beers of BCOJ (November 1, 2004, revised edition), 7.11 Total Polyphenol" as prescribed by Brewery Association of Japan, Brewery Convention of Japan (BCOJ).

The raw material liquid obtained is subjected to a step of mixing with a hop extract water.

The hop extract water is obtained by adding hops to water to perform extraction, and removing a residue.

As the hops for extraction, hops usable in the raw material liquid can be similarly used. The kinds of hops may be identical or different, and two or more kinds may be used in combination. In addition, in a case where a processed product is used, the shapes are also not particularly limited.

The water for extraction is preferably a hot water, and its temperature is preferably from 60° to 100°C, and more preferably from 80° to 100°C. In addition, the pH is, but not particularly limited to, for example, from 4.5 to 9.5.

The amount of hops for extraction used is not unconditionally determined depending upon the desired flavor, and the amount used out of the amount of entire hops usable in the production of ordinary beer or *Happoshu* is preferably 10% by weight or more, more preferably 15% by weight or more, and even more preferably 20% by weight or more, from the viewpoint of increasing a polyphenol content while reducing the loss in stock of the sugar-containing liquid. In addition, the upper limit is, but not particularly limited to, preferably 99.8% by weight or less.

A weight ratio of the hops to be subjected to extraction to the hops usable for the raw material liquid (hops for extraction / hops usable for raw material liquid) is preferably from 0.5/1 to 45/1, and more preferably 0.6/1 to 40/1.

In addition, a weight ratio of the hops to be subjected to extraction (hop solid content) to water (hop solid content / water) is preferably from 22.2/500 to 66.6/500, more preferably 30/500 to 60/500, and even more preferably 35/500 to 55/500, from the viewpoint of extraction rate and separation of hop draff.

These extraction materials are filled in a known extraction apparatus, for example, a stainless steel tank or the like, and subjected to extraction.

The extraction temperature is preferably 60°C or higher, more preferably 70°C or higher, and even more preferably 80°C or higher, from the viewpoint of extraction efficiency. In addition, the extraction temperature is preferably 100°C or lower, more preferably 99°C or lower, and even more preferably 98°C or lower, from the viewpoint of controlling evaporation.

The extraction time is not unconditionally determined depending upon the amount and kinds of hops, extraction apparatus and conditions, and the extraction time is preferably from 50 to 100 minutes, from the viewpoint of extraction and isomerization of bitterness ingredients.

After the extraction an extraction residue is removed, thereby obtaining a hop extract water in the present invention. The step of removing an extraction residue is exemplified by centrifugation, filtration, ultrafiltration, and a filtration method suitable in large-scale production can be preferably used. Here, after the filtration, the filtrate may be concentrated in accordance with a known technique.

Thus, a hop extract water is obtained. The polyphenol concentration of the hop extract water is preferably 1,000 ppm or more, more preferably 1,200 ppm or more, and even more preferably 1,500 ppm or more. In addition, the upper limit is, but not particularly set, for example, 5,000 ppm or so. Here, the polyphenol concentration of the hop extract water is measured in accordance with a measurement method mentioned above after diluting to a given concentration.

The hop extract water obtained is mixed with the above raw material liquid.

A method of mixing a raw material liquid with a hop extract water may be a method including adding them in a single batch and mixing the ingredients while stirring, or may be a method including adding in divided portions, and mixing the ingredients while stirring. For example, the hop extract water may be mixed therewith in a single batch at the point of termination of boiling of a raw material liquid, or may be mixed in divided portions during boiling of a raw material liquid.

The mixing temperature is preferably 75°C or higher, more preferably 80°C or higher, and even more preferably 85°C or higher, from the viewpoint of heat coagulation with the protein. In addition, the upper limit is, but not particularly set, for example, 100°C or so. The mixing time cannot be unconditionally determined depending upon the amount of liquid, temperature, and apparatus, and the mixing time is preferably, for example, from 10 to 60 minutes.

The liquid mixture obtained is referred to as a sugar-containing liquid in the present invention. The polyphenol concentration of the sugar-containing liquid is preferably 500 ppm or more, more preferably 800 ppm or more, and even more preferably 1,200 ppm or more. In addition, the polyphenol concentration is preferably 2,200 ppm or less, more preferably 2,100 ppm or less, and even more preferably 2,050 ppm or less.

A total amount of the extract component in the sugar-containing liquid is preferably 3.5% by weight or more, more preferably 5.0% by weight or more, and even more preferably 6.5% by weight or more, from the viewpoint of a total amount of hops used. In addition, the total amount is preferably less than 17.0% by weight, and more preferably 16.0% by weight, from the viewpoint of preparation of a sugar-containing liquid. The extract component as used herein refers to fluctuating nonvolatile ingredients that are originated from raw materials such as malts, rice, maize (corns), *Sorghum bicolor (Kaoliang),* potatoes, starches, *mugi* other than malts, and sugars, high-intensity sweeteners, acidulants, bittering agents, colorants, and flavors.

A weight ratio of a total amount of polyphenols to a total amount of an extract component in the sugar-containing liquid (total amount of polyphenols / total amount of extract component) is preferably from 2.1 × 10⁻²/1 to 0.25 × 10⁻²/1, more preferably from 2.0 × 10⁻²/1 to 0.3 × 10⁻²/1, and even more preferably from 1.9 × 10⁻²/1 to 0.4 × 10⁻²/1, from the viewpoint of giving *shimari* to the taste.

In addition, a weight ratio of a total amount of polyphenols of the hop extract water to a total amount of polyphenols of the raw material liquid (total amount of polyphenols of hop extract water / total amount of polyphenols of raw material liquid) is preferably from 10000/1 to 0.20/1, more preferably from 12.10/1 to 0.20/1, even more preferably from 10/1 to 0.50/1, and even more preferably from 8.10/1 to 0.9/1, from the viewpoint of controlling the loss in stock of the sugar-containing liquid.

A weight ratio of a total amount of polyphenols of the hop extract water to a total amount of polyphenols derived from all the hops used (total amount of polyphenols derived from hop extract water / total amount of polyphenols derived from all hops) is preferably from 1/1 to 0.17/1, more preferably from 0.91/1 to 0.17/1, even more preferably from 0.90/1 to 0.32/1, and even more preferably from 0.89/1 to 0.47/1, from the viewpoint of even more controlling the loss in stock of the sugar-containing liquid. Here, a total amount of polyphenols derived from all the hops used refers to a value of weight calculated by measuring a polyphenol concentration of each of the sugar-containing liquid and the hop extracts, and multiplying the respective liquid volumes therewith in additive manner.

A beer-taste beverage can be produced by subjecting a sugar-containing liquid after mixing to removal of solid content such as coagulated protein in a fining tank. In addition, a beer-taste beverage can be produced by adding an yeast to the sugar-containing liquid after mixing to allow fermentation, and optionally removing the yeast or the like with a filtration apparatus. Accordingly, the present invention also provides a sugar-containing liquid obtained by the method of the present invention.

Since the sugar-containing liquid obtained by the method of the present invention has a high polyphenol concentration and is controlled in loss in stock based on the raw materials used, its productivity is high, and may be directly used in the production of a beer-taste beverage, or may be filled in a tank to be stored or transported. Here, in a case where an yeast is still contained in the sugar-containing liquid, the sugar-containing liquid obtained is preferably chilled storage or stored in a cool-dark place.

Furthermore, the present invention provides a beer-taste beverage using a sugar-containing liquid obtained by the method of the present invention as a raw material.

Specifically, a beer-taste beverage can be produced by removing solid contents such as coagulated proteins from a sugar-containing liquid of the present invention in a fining tank, thereafter adding an yeast thereto to allow fermentation, and optionally removing the yeast and the like with a filtration apparatus or the like. Here, the method can go through the steps of storage (stored liquor), filtration and container filling, and optionally sterilization, and as the conditions for these solid content removing step, fermentation step, and the like, conditions that are generally known may be used.

The beer-taste beverage of the present invention exhibits some excellent effects that the polyphenol content is high and body is given.

### EXAMPLES

The present invention will be specifically described hereinbelow by the Examples, without intending to limit the scope of the present invention to the following Examples.

### Examples (Levels 3, 4, 6, 7, 8, 9, and 10), and Comparative Examples (Levels 1, 2, and 5)

First, 37.5 kg of malts were pulverized to suitable particle sizes, and pulverized malts were supplied into a mash tun, and thereafter 112.5 L of hot water was added thereto, to produce a mash at about 50°C. The mash of which saccharification was completed was heated to 76°C and transferred to a wort filtration tank, to perform filtration to obtain a filtrate. The filtrate obtained was boiled at 100°C for 80 minutes, 300 g of hops were supplied thereto, and thereafter the wort was allowed to stand to obtain a supernatant.

Next, hops each as listed in Table 1 were added to
a mixture prepared by adding 6.92 g of hops to 100 mL of the supernatant in Level 2, or
a mixture prepared by adding 50 mL of water to 50 mL of supernatant in Level 6, or
a mixture prepared by diluting a saccharide starch to prepare 100 mL of a liquid in which a total amount of the extract component was 18% by weight,
while stirring, to give a raw material liquid. Here, a total amount of the extract component is a value measured for a diluted saccharide starch with an extract meter (Model: DMA4500M, manufactured by Anton Paar).

Thereafter, a hop extract water obtained as described later was added in an amount as listed in Table 1 for each of Level 3, Level 4, Level 5, Level 6, Level 7, Level 8, Level 9, and Level 10 to provide a sample. Here, as to Level 5, one which was sufficiently diffused without performing removal of a residue from a hop extract water was added. Here, the mixing of the hop extract water and the raw material liquid was carried out at 90°C.

The hop extract water was prepared as follows. Seven-hundred grams of hops and 7 L of water (temperature: 97°C) were supplied in a heating tank, the contents were heated at 97°C for 80 minutes, and thereafter a hop extraction residue was removed therefrom, to give a hop extract water (polyphenol concentration: 4,528 ppm).

The degree of loss in stock for the samples of Levels 1 to 10 obtained was calculated as follows. The results are shown in Table 1.

First, a solid content concentration when a given amount of dry hops is introduced into a hot water is measured according to the weights of the various dry hops, and a relationship formula between the amount of dry hops and the solid content concentration is previously obtained. The method for measuring a solid content concentration is described later. Next, loss in stock amount when a given amount of dry hops is separately introduced to a hot water is measured according to the weights of the various dry hops, and a relationship formula between the amount of dry hops and loss in stock is previously obtained. The method for measuring loss in stock is described later. Thereafter, solid content concentrations of samples of Levels 1 to 10 are obtained, which are converted to the amount of dry hops based on the relationship formula mentioned above, and then loss in stock was obtained.

### < Solid Content Concentration >

Dry hops are extracted with a hot water, thereafter an extract is homogenized, and a 50 g sample is taken. In the case of a sample, 50 g of the sugar-containing liquid itself is taken. Thereafter, the mixture is then stirred at 10,000 rpm for 10 minutes, to measure an amount of supernatant after stirring. Moreover, a solid content concentration (% by weight) is obtained by (50 g - Amount of Supernatant) / 50 × 100. Once the solid content concentration is obtained, the amount of dry hops introduced can be calculated.

### < Loss in Stock >

A given amount of dry hops was dispersed in hot water to extract a hop ingredient, the dispersion was then subjected to a liquid-solid separation with a 80 µm mesh, and the collected amount of liquid was measured to calculate a weight loss in stock (g), and a loss in stock (%) was calculated by weight loss in stock (g)/weight of hot water used (g) × 100. Once the amount of dry hops introduced is obtained, the loss in stock (%) can be calculated.

Here, a total amount of an extract component was measured in accordance with a method described in "The Methods of Analysis of Beers (November 1, 2004, revised edition), 7.2 Extract" as prescribed by Brewery Association of Japan, Brewery Convention of Japan (BCOJ). In addition, the polyphenol content can be measured in accordance with any methods that are generally known, and was measured with a method described in "The Methods of Analysis of Beers of BCOJ (November 1, 2004, revised edition), 7.11 Total Polyphenol" as prescribed by Brewery Association of Japan, Brewery Convention of Japan (BCOJ).
[Table 1]

**Table 1**

| | | Level 1 | Level 2 | Level 3 | Level 4 | Level 5 | Level 6 | Level 7 | Level 8 | Level 9 | Level 10 |
|---|---|---|---|---|---|---|---|---|---|---|---|
| Raw Material Liquid | Amount of Solvent Used (mL) | 100 | 100 | 100 | 100 | 100 | 50 | 100 | 100 | 100 | A-Ex=18.0% Dilution |
| | Water for Dilution (mL) | 0 | 0 | 0 | 0 | 0 | 50 | 0 | 0 | 0 | 0 |
| | Amount of Hops (g) | 0.36 | 7.28 | 0.36 | 0.36 | 0.36 | 0.18 | 0.36 | 0.36 | 0.36 | 0 |
| | Polyphenol Concentration (ppm) | 504.49 | 2760.24 | 504.49 | 504.49 | 504.49 | 252.25 | 504.49 | 504.49 | 504.49 | 0 |
| | Total Amount of Polyphenol (mg) | 50.449 | 276.024 | 50.449 | 50.449 | 50.449 | 25.225 | 50.449 | 50.449 | 50.449 | 0 |
| Hop Extract Water | Amount (mL) | 0 | 0 | 2.21 | 45.00 | 73.79 | 45.00 | 90.00 | 10.00 | 135.00 | 45.00 |
| | Total Amount of Polyphenol (mg) | 0 | 0 | 10.007 | 203.76 | 334.121 | 203.76 | 407.52 | 45.28 | 611.28 | 203.76 |
| | Removal or Non-Removal of Residue | Non-Removal | Non-Removal | Non-Removal | Non-Removal | Removal | Non-Removal | Non-Removal | Non-Removal | Non-Removal | Non-Removal |
| Sugar-Containing Liquid | Polyphenol Concentration (ppm) | 504.49 | 2760.24 | 571.76 | 2017.98 | 1405.38 | 1260.00 | 1886.72 | 819.18 | 2200.48 | 2029.98 |
| | Total Amount of Extract Component (% by weight) | 20.82 | 23.64 | 20.28 | 15.24 | 13.68 | 7.92 | 12.48 | 19.08 | 10.72 | 14.04 |
| | Total Amount of Polyphenol/ Total Amount of Extract Component | 0.24× 10⁻² | 1.17×10⁻² | 0.28×10⁻² | 1.32×10⁻² | 1.03×10⁻² | 1.59× 10⁻² | 1.51×10⁻² | 0.43 ×10⁻² | 2.05×10⁻² | 1.45×10⁻² |
| Weight of Hops for Extraction/Weight of Hops for Raw Material Liquid (Weight Ratio) | | 0 | 0 | 0.614 | 12.5 | 20.5 | 25 | 25 | 2.78 | 37.5 | - |
| Total Amount of Polyphenol of Extract Water/ Total Amount of Polyphenol of Raw Material Liquid (Weight Ratio) | | 0 | 0 | 0.20 | 4.04 | 6.62 | 8.08 | 8.08 | 0.90 | 12.12 | - |
| Total Amount of Polyphenol of Extract Water/ Total Amount of Polyphenol Derived from All Hops (Weight Ratio) | | 0 | 0 | 0.17 | 0.80 | 0.87 | 0.89 | 0.89 | 0.47 | 0.92 | 1.00 |
| Value of Amount of Supernatant (g) | | 49.3 | 37.3 | 49.3 | 49.1 | 35.8 | 49.2 | 48.9 | 49.3 | 48.8 | 49.5 |
| Amount of Solid Content (g) | | 0.7 | 12.7 | 0.7 | 0.9 | 14.2 | 0.8 | 1.1 | 0.7 | 1.2 | 0.5 |
| Solid Content Concentration (% by weight) | | 1.4 | 25.4 | 1.4 | 1.8 | 28.4 | 1.6 | 2.2 | 1.4 | 2.4 | 1 |
| Calculated Weight of Dry Hops (g) | | 0.22 | 3.95 | 0.22 | 0.28 | 4.42 | 0.25 | 0.34 | 0.22 | 0.37 | 0.16 |
| Loss in Stock (%) | | 0.39 | 7.11 | 0.39 | 0.50 | 7.94 | 0.45 | 0.62 | 0.39 | 0.67 | 0.28 |

As a result, Levels 3, 4, 6, 7, 8, 9, and 10 which are Examples had the same level of loss in stock as Level 1 which is a comparative example according to a conventional production method, so that the control of loss in stock according to the method of the present invention was confirmed.

In addition, even when the polyphenol contents (total amount of polyphenols/total amount of extract component) per the extract component of the samples were confirmed, it could be confirmed to have a high polyphenol content as compared to that of Level 1.

### INDUSTRIAL APPLICABILITY

The method of the present invention can prepare a sugar-containing liquid having a high polyphenol concentration with an excellent productivity, so that a beer-taste beverage given with body can be provided.

## Claims

1. A method for producing a sugar-containing liquid, comprising mixing a raw material liquid and a hop extract water.

2. The method according to claim 1, wherein a polyphenol concentration of the sugar-containing liquid is from 600 to 2,200 ppm.

3. The method according to claim 1 or 2, wherein a weight ratio of a total amount of polyphenols to a total amount of an extract component in the sugar-containing liquid (total amount of polyphenols / total amount of an extract component) is from 2.1 × 10⁻²/1 to 0.25 × 10⁻²/1.

4. The method according to any one of claims 1 to 3, wherein the raw material liquid and the hop extract water are mixed in an amount so as to have a weight ratio of a total amount of polyphenols of the hop extract water to a total amount of polyphenols of the raw material liquid (total amount of polyphenols derived from hop extract water / total amount of polyphenols of raw material liquid) exceeding 0.20.

5. The method according to any one of claims 1 to 4, wherein the raw material liquid and the hop extract water are mixed so as to have a weight ratio of a total amount of polyphenols of the hop extract water to a total amount of polyphenols derived from all the hops (total amount of polyphenols derived from hop extract water / total amount of polyphenols derived from all hops) of from 1/1 to 0.17/1.

6. The method according to any one of claims 1 to 5, wherein a hot water-extracted hop extract water is used.

7. The method according to any one of claims 1 to 6, wherein the raw material liquid is a first wort.

8. A sugar-containing liquid produced by the method as defined in any one of claims 1 to 7.

9. A beer-taste beverage wherein a sugar-containing liquid obtained by the method as defined in any one of claims 1 to 7 is used as a raw material.
